# EUROPEAN PATENT SPECIFICATION

(11) **EP 1 507 655 B1**
(45) Date of publication and mention of the grant of the patent: **20.02.2008**
(21) Application number: 03727691.2
(22) Date of filing: 22.05.2003
(51) Int. Cl.: B32B 15/08, B63B 5/24, B63B 3/20

(54) **IMPROVED STRUCTURAL SANDWICH PLATE MEMBERS**
VERBESSERTES SANDWICH-PLATE-SYSTEM (SPS)
ELEMENTS DE PLAQUES SANDWICH STRUCTURALES AMELIOREES

(30) Priority: 29.05.2002 GB 0212392
(43) Date of publication of application: 23.02.2005
(73) Proprietor: Intelligent Engineering (Bahamas) Limited, Nassau (BS)
(72) Inventor: KENNEDY, Stephen, John, Ottawa, Ontario K17 0N2 (CA)
(74) Representative: Leeming, John Gerard
(86) International application number: PCT/GB2003/002229
(87) International publication number: WO 2003/101728

(56) References cited:
- EP-A- 0 421 222
- EP-A- 1 246 722
- WO-A-02/20342
- WO-A-90/05633
- WO-A-98/21029
- WO-A-99/64234
- WO-A-03/002321
- WO-A-03/002341
- DE-A- 2 828 734
- DE-A- 19 825 084
- DE-A- 19 825 085
- DE-A- 19 825 087
- DE-A- 19 835 727
- GB-A- 2 066 156
- US-A- 3 696 452
- US-A- 3 864 201
- US-A- 5 778 813
- US-A- 6 050 208

## Description

The present invention relates to structural sandwich plate members which comprise two outer plates and a core of plastics or polymer material bonded to the outer plates with sufficient strength to substantially contribute to the structural strength of the member.

Structural sandwich plate members are described in US 5,778,813 and US 6,050,208, and comprise outer metal, e.g. steel, plates bonded together with an intermediate elastomer core, e.g. of unfoamed polyurethane. These sandwich plate systems may be used in many forms of construction to replace stiffened steel plates and greatly simplify the resultant structures, improving strength and structural performance (stiffness, damping characteristics) while saying weight. Further developments of these structural sandwich plate members are described in International Patent Application GB00/04198. As described therein, foam forms may be incorporated in the core layer to reduce weight and transverse metal sheer plates may be added to improve stiffness.

According to the teachings of GB00/04198 the foam forms can be either hollow or solid. Hollow forms generate a greater weight reduction and are therefore advantageous. The forms described in this document are not confined to being made of light weight foam material and can also be make of other materials such as wood or steel boxes.

International Patent Application GB02/01565 is a further development of the concept of including hollow forms and describes forms that are easy to manufacture and assemble, in particular hollow elongate forms made from snap-together pieces are described.

It is an aim of the present invention to provide structural sandwich plate members including lightweight forms within the core and having reduced shear deformations under load and improved lateral load distribution.

According to the present invention, there is provided: a structural sandwich plate member comprising: first and second outer plates formed of metal; a core of substantially compact plastics or polymer material bonded to said outer plates with sufficient strength to transfer shear forces therebetween; and a plurality of relatively lightweight forms disposed within said core; wherein said lightweight forms are disposed so that there are ribs of said plastics or polymer material extending in two substantially orthogonal directions in the plane of said plate member, said ribs also extending between said first and second outer plates.

By arranging the lightweight forms such that the plastics or polymer material of the core forms ribs extending in two substantially orthogonal directions, a better lateral distribution of loads applied to the plate is obtained, thereby reducing shear deformations of the plate member under load. In use, a load applied locally to the plate member will be transferred in two orthogonal directions by the plastics or polymer material ribs as well as via the outer plates.

The invention may be used with foam and hollow forms as described in International Patent Applications GB00/04198 and GB02/01565 as well as any other suitable forms. The lightweight forms serve to reduce the mass of the structural sandwich plate member and need not contribute significantly to its structural strength. The principal requirements on the lightweight forms are that they are of lower density than the plastics or polymer material forming the core and have sufficient thermal and mechanical properties to maintain the desired shape during injection and curing of the plastics or polymer core.

Where the structural sandwich plate member is rectilinear, the ribs may extend in directions substantially parallel to the edges of the plate but may also extend in directions making an angle to the edges of the plate member.

The materials, dimensions and general properties of the outer plates of the structural sandwich plate member of the invention may be chosen as desired for the particular use to which the structural sandwich plate member is to be put and in general may be as described in US-5,778,813 and US-6,050,208: Steel or stainless steel is commonly used in thicknesses of 0.5 to 20mm and aluminium may be used where light weight is desirable. Similarly, the plastics or polymer core may be any suitable material, for example an elastomer such as polyurethane, as described in US-5,778,813 and US-6,050,208.

For some applications, non-metal faceplates, as described in UK patent application 0201903.2 entitled "Improved Structural Sandwich Plate Members" and incorporated herein by reference, may be used. Such non-metal faceplates may be made of a reinforced composite or polymer material, such as fibre-reinforced polymer material, and have thicknesses in the range of from 1 to 30mm.

Further, the invention provides a method of manufacturing a structural sandwich plate member comprising the steps of: providing first and second outer plates formed of metal in a spaced-apart relationship with a plurality of lightweight forms located therebetween; injecting uncured plastics or polymer material to fill the space defined between said outer plates and said lightweight forms; and allowing said plastics or polymer material to cure to form a substantially compact material that bonds said outer plates together with sufficient strength to transfer shear forces therebetween; wherein said lightweight forms are disposed so that said plastics or polymer material forms ribs extending in two substantially orthogonal directions in the plane of said plate member.

The present invention will be described below with reference to exemplary embodiments and the accompanying schematic drawings, in which:
Figure 1 is a part-sectional, perspective view of a bridge deck utilising structural sandwich plate members according to a first embodiment of the present invention;
Figure 2 is a plan cross-sectional view of a structural sandwich plate member according to a first embodiment of the present invention;
Figure 3 is a cross-sectional view along the line A-A in Figure 1;
Figure 4 is a cross-sectional view along the line B-B in Figure 1;
Figure 5 is a view similar to Figure 1 of a second embodiment of the present invention;
Figure 6 is a cross-sectional view along the line A-A in Figure 4; and
Figure 7 is a cross-sectional view along the line B-B in Figure 4.

In the various drawings, like parts are indicated by like reference numerals.

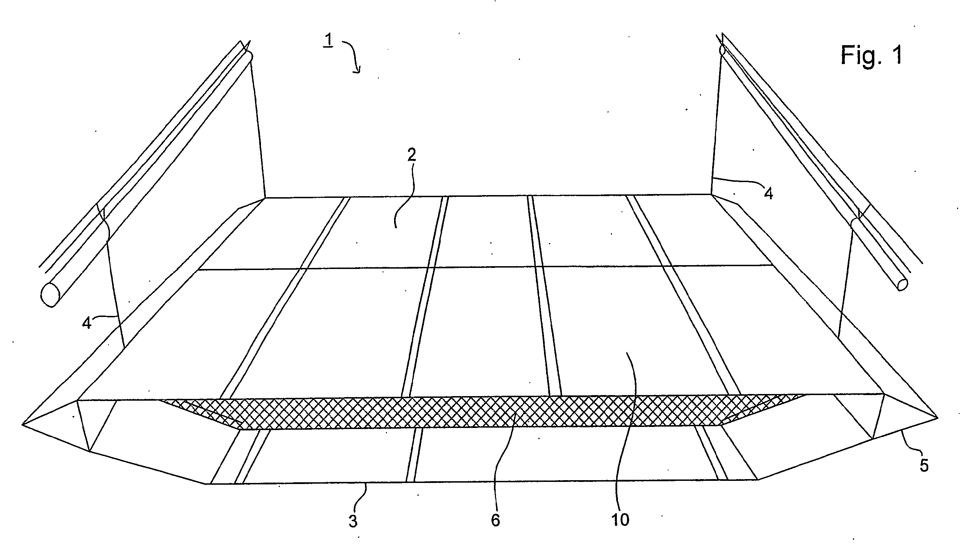

Figure 1 shows a part of a bridge deck 1 in which a structural sandwich plate member according to the present invention may be used. The bridge deck is in the form of a box girder with deck 2 and soffit 3 formed of panels 10 according to the invention of about 5 or 6m width and about 11 or 12m length. The panels 10 are supported by transverse diaphragms 6 at spacings of about 4.5m. Four panels across the width of the bridge make a spacing of about 27m between hangers 4. Faring noses 5 are separate, non-structural pieces.

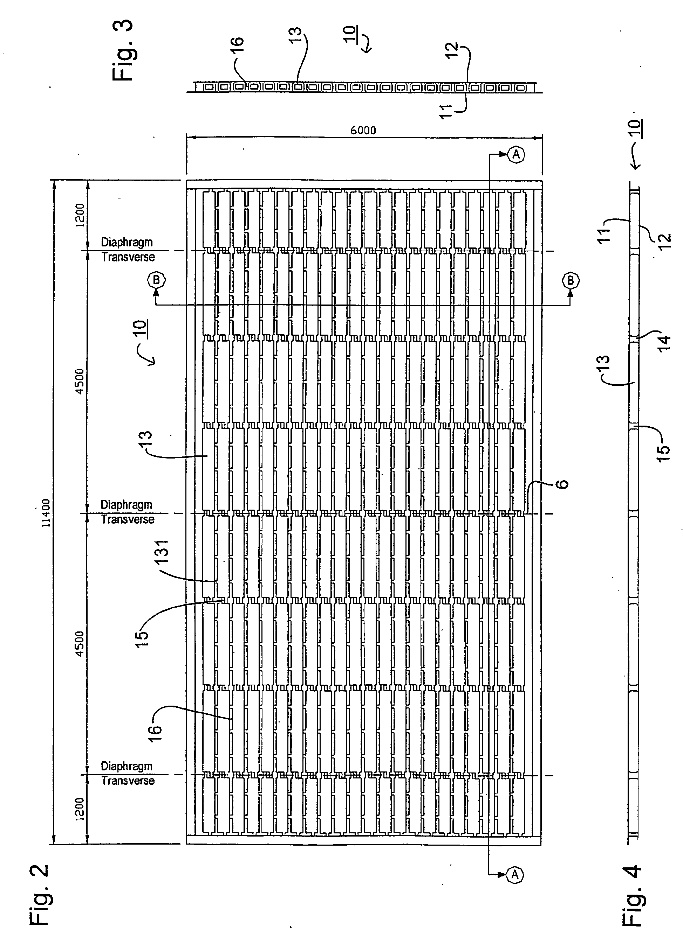

Figures 2, 3 and 4 are respective plan, longitudinal and lateral sectional views of a structural sandwich plate member according to the present invention which is suitable for use in the deck of a road bridge: Note that the longitudinal direction is the direction of primary load transfer. The panel 10 may be of the order of 5 to 6m wide and 10 to 12m long and bear truck loads of total weight 625kN or greater as part of a stiffened box girder.

The structural sandwich plate member comprises upper and lower outer plates (faceplates) 11, 12 which may be of steel and have a thickness of *e*.*g*. in the range of from 0.5 to 20mm. In the present application a thickness of 6mm is suitable. Edge plates are welded between the faceplates 11, 12 around their outer peripheries to form a closed cavity. In the cavity between the faceplates 11, 12 is a core 14 of plastics or polymer material, preferably a polyurethane elastomer. This core may have a thickness in the range of from 15 to 200mm; in the present application 160mm is suitable. The core 14 is bonded to the faceplates 11, 12 with sufficient strength and has sufficient mechanical properties to transfer shear forces expected in use between the two faceplates. The bond strength between the core 14 and faceplates 11, 12 should be greater than 3MPa, preferably 6MPa, and the modulus of elasticity of the core material should be greater than 250MPa. For low load applications, such as floor panels, where the typical use and occupancy loads are of the order of 1.4kPa to 7.2kPa, the bond strength may be lower, e.g. approximately 1MPa. By virtue of the core layer, the structural sandwich plate member has a strength and load bearing capacity of a stiffened steel plate having a substantially greater plate thickness and significant additional stiffening.

To reduce the weight of the structural sandwich plate member 10, not all of the volume between the faceplates 11, 12 is occupied by core 14. Instead, an array of lightweight forms 13 is provided, occupying a substantial part of the internal volume of the plate member. The lightweight forms 13 do not need to significantly contribute to the structural strength of the plate and they require only to have thermal and mechanical properties sufficient to withstand the pressure of injection of the material to form core 14 and the heat from the exothermic reaction of the core during curing. The lightweight forms 13 may be solid or hollow and may for example comprise solid foam blocks, hollow plastic moldings or hollow expanded polypropylene moldings. The forms are generally rectilinear in shape and laid out in a grid so that the core 14 includes a plurality of ribs 15, 16 extending perpendicular and parallel to the long dimension of the forms 13, whilst the forms themselves extend generally in the short direction of the structural sandwich plate member 10. In use, the ribs 16 of the core 14 extending in the long direction of the panel 10, transfer loads to the transverse diaphragms 6 whilst the ribs 15 spanning in the short direction of the panel 10 assist in distributing the load laterally and reduce local shear deformations in the panel. Since the principal load transfer in the panel is to the transverse diaphragms 6, only a relatively small number of transverse ribs 15 are required. For example, seven transverse ribs 15 in a panel width of about 11m may suffice. In general, the spacing between transverse ribs may be in the range of from 0.5 to 2m.

The width of the transverse ribs 15 may be between about 10 and 100mm; 50mm is suitable in the present application. In cross-section, the transverse ribs 15 may be rectangular or may be shaped like Ionic columns (wider tops and bases) to increase the area of the bond to the faceplates 11, 12.

The lightweight forms 13 are shown in plan view as having stubs 131 on three sides thereof. The stubs 131 butt against the adjacent form, or an edge plate of the structural sandwich plate member, to maintain the required spacing to form the ribs. The stubs 131 do not extend the full height of the structural sandwich plate member 10 so that they form only small holes in the ribs of the core rather than interrupting them. Additional stubs 131 may be provided on the top and bottom faces of the forms 13 to space the forms apart from the faceplates 11, 12 creating a substantially continuous layer of elastomer adjacent each faceplate. Polypropylene spacers may be provided to space the forms 13 away from the edges of the structural sandwich plate member.

To manufacture the structural sandwich plate member 10 the edge plates are welded around the periphery of lower faceplate 11 and then forms 13 and any spacers placed in the resulting open cavity. At this stage, any precast sections of the core may be put in place as well as any shear plates or other fittings that may be desired. Then, the upper faceplate 12 is welded to the edge plates to form a closed cavity and the plastics or polymer material injected to form core 14, including ribs 15, 16. The injected material is then allowed to cure and the injection ports used in the injection step ground off and sealed along with the vent holes. These steps may be performed in situ, or off-site in factory conditions and the finished panel transported to the installation site.

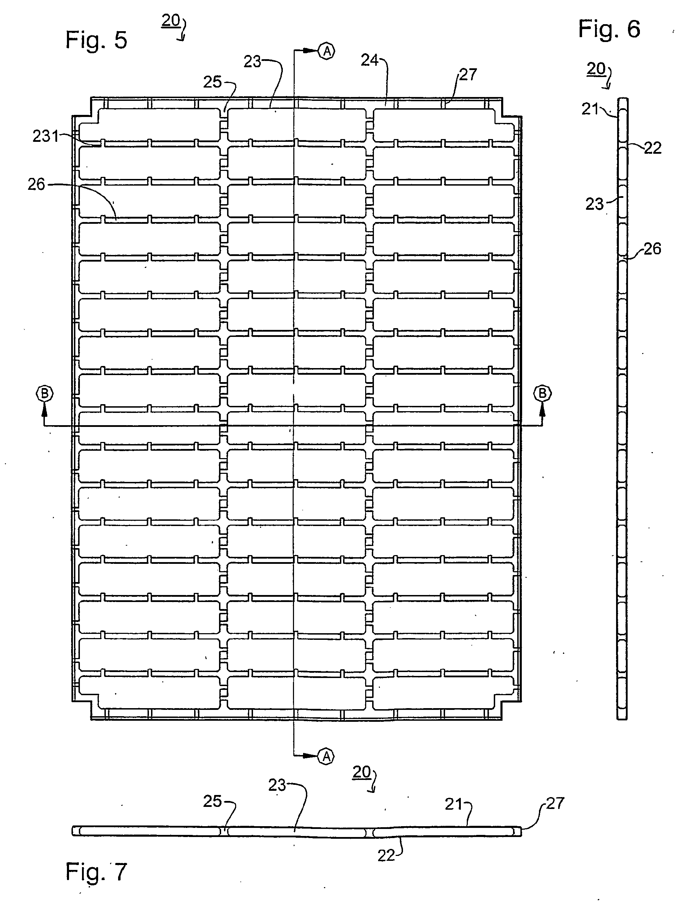

A structural sandwich plate member according to a second embodiment of the present invention is shown in Figures 5, 6 and 7 which are views corresponding to Figures 2, 3 and 4. This plate member may be used as a floor panel, *e*.*g*. in a building or floating structure. The structural sandwich plate member 20 of the second embodiment is similar to that of the first but smaller and has only two longitudinal ribs across a width of about 3m. In view of the lower loads expected in use, the faceplates may have thicknesses of about 3mm and the core thickness may be 60mm. In Figures 4, 5 and 6 parts of the structural sandwich plate member 20 are labelled with references corresponding to those of Figures 2 to 4 with the addition of 10. Polypropylene spacers are shown as 27. In this embodiment, the principal load transfer is across the short dimension of the panel, via ribs 26. Transverse ribs 25 assist in load distribution and reduce lateral shear deformations.

In the above embodiments, the transverse ribs are formed when the plastics or polymer material is injected to form the core 13. However, the ribs may also be formed as precast elements which are glued to the faceplates 11, 12.

## Claims

1. A structural sandwich plate member comprising:
first and second outer plates (11, 12) formed of metal;
a core (14) of substantially compact plastics or polymer material bonded to said outer plates with sufficient strength to transfer shear forces therebetween; and a plurality of lightweight forms (13) disposed within said core (14), the forms having a lower density than said compact plastics or polymer material;
wherein said lightweight forms (13) are disposed so that there are ribs (15,16) of said plastics or polymer material extending in two substantially orthogonal directions in the plane of said plate member, said ribs also extending between said first and second outer plates.

2. A structural sandwich plate member according to claim 1 and having a rectilinear shape, wherein said two substantially orthogonal directions are substantially parallel to the edges of said structural sandwich plate member.

3. A structural sandwich plate member according to claim 1 and having a substantially rectilinear shape, wherein said substantially orthogonal directions form an acute angle to the edges of said structural sandwich plate member.

4. A structural sandwich plate member according to claim 1, 2 or 3 wherein the spacing between ribs (15) extending in a first of said two substantially orthogonal directions is greater than the spacing between ribs (16) extending in a second of said two substantially orthogonal directions.

5. A structural sandwich plate member according to claim 4, wherein the spacing between ribs (15) extending in said first of said two substantially orthogonal directions is in the range of from 0.5 to 2m.

6. A structural sandwich plate member according to any one of the preceding claims, wherein the thickness of said ribs (15, 16) is in the range of 10 to 100mm.

7. A structural sandwich plate member according to any one of the preceding claims, wherein said ribs (15, 16) extend substantially uninterrupted from one edge of said structural sandwich plate member to another.

8. A structural sandwich plate member according to any one of the preceding claims wherein said ribs (15,16) span between said first and second outer plates (11, 12).

9. A structural sandwich plate member according to any one of the preceding claims wherein said ribs (15, 16) have been formed by injection of said plastics or polymer material into a space defined between said first and second plates.

10. A method of manufacturing a structural sandwich plate member comprising the steps of:
providing fist and second outer plates (11, 12) formed of metal in a spaced-apart relationship with a plurality of lightweight forms (13) located therebetween;
injecting uncured plastics or polymer material to fill the space defined between said outer plates and said lightweight forms; and
allowing said plastics or polymer material to cure to form a substantially compact material (14) that bonds said outer plates together with sufficient strength to transfer shear forces therebetween;
wherein said lightweight forms are disposed so that said plastics or polymer material forms ribs (15, 16) extending in two substantially orthogonal directions in the plane of said plate member.

## Patentansprüche

1. Struktursandwichplattenbauteil, mit
einer ersten und einer zweiten äußeren Platte (11, 12), die aus Metall ausgebildet sind,
einem Kern (14) aus im Wesentlichen kompaktem Plastik- oder Polymermaterial, der mit den äußeren Platten mit einer ausreichenden Stärke zum Übertragen von Scherkräften zwischen diesen verbunden ist, und einer Mehrzahl von Formen (13) mit geringem Gewicht, die in dem Kern (14) angeordnet sind, wobei die Formen eine geringere Dichte als das kompakte Plastik- oder Polymermaterial aufweisen,
bei dem die Formen (13) mit geringem Gewicht so angeordnet sind, dass es Rippen (15, 16) des Plastik- oder Polymermaterials gibt, die sich in zwei im Wesentlichen senkrecht zueinander verlaufenden Richtungen in der Ebene des Plattenbauteils erstrecken, wobei sich die Rippen auch zwischen der ersten und der zweiten äußeren Platte erstrecken.

2. Struktursandwichplattenbauteil nach Anspruch 1 und mit einer geradlinigen Gestalt, wobei die zwei im Wesentlichen senkrecht zueinander verlaufenden Richtungen im Wesentlichen parallel zu den Rändern des Struktursandwichplattenbauteils sind.

3. Struktursandwichplattenbauteil nach Anspruch 1 und mit einer im Wesentlichen geradlinigen Gestalt, bei dem die im Wesentlichen senkrecht zueinander verlaufenden Richtungen einen spitzen Winkel zu den Rändern des Struktursandwichplattenbauteils bilden.

4. Struktursandwichplattenbauteil nach Anspruch 1, 2 oder 3, bei dem der Raum zwischen Rippen (15), die sich in einer ersten von den zwei im Wesentlichen senkrecht zueinander verlaufenden Richtungen erstrecken, größer ist als der Raum zwischen Rippen (16), die sich in einer zweiten von den zwei im Wesentlichen senkrecht zueinander verlaufenden Richtungen erstrecken.

5. Struktursandwichplattenbauteil nach Anspruch 4, bei dem der Raum zwischen Rippen (15), die sich in der ersten von den zwei im Wesentlichen senkrecht zueinander verlaufenden Richtungen erstrecken, im Bereich von 0,5 - 2 m ist.

6. Struktursandwichplattenbauteil nach einem der vorhergehenden Ansprüche, bei dem die Dicke der Rippen (15, 16) im Bereich von 10 - 100 mm ist.

7. Struktursandwichplattenbauteil nach einem der vorhergehenden Ansprüche, bei dem sich die Rippen (15, 16) im Wesentlichen ununterbrochen von einem Rand des Struktursandwichplattenbauteils zu einem anderen erstrecken.

8. Struktursandwichplattenbauteil nach einem der vorhergehenden Ansprüche, bei dem sich die Rippen (15, 16) zwischen der ersten und der zweiten äußeren Platte (11, 12) erstrecken.

9. Struktursandwichplattenbauteil nach einem der vorhergehenden Ansprüche, bei dem die Rippen (15, 16) durch Injektion des Plastik- oder Polymermaterials in einen Raum, der zwischen der ersten und der zweiten Platte definiert ist, ausgebildet worden sind.

10. Verfahren zum Herstellen eines Struktursandwichplattenbauteils mit den Schritten:
Vorsehen einer ersten und einer zweiten äußeren Platte (11, 12), die aus Metall ausgebildet sind, in einer beabstandeten Beziehung mit einer Mehrzahl von Formen (13) mit geringem Gewicht, die sich zwischen ihnen befinden,
Injizieren von ungehärtetem Plastik- oder Polymermaterial zum Auffüllen des Raums, der zwischen den äußeren Platten und den Formen mit geringem Gewicht definiert ist, und
Ermöglichen dem Plastik- oder Polymermaterial, sich zum Ausbilden eines im Wesentlichen kompakten Materials (14), das die äußeren Platten miteinander mit einer ausreichenden Stärke zum Übertragen von Schwerkräften zwischen ihnen verbindet, zu härten,
wobei die Formen mit geringem Gewicht so angeordnet sind, dass das Plastik- oder Polymermaterial Rippen (15, 16) ausbildet, die sich in zwei im Wesentlichen senkrecht zueinander verlaufenden Richtungen in der Ebene des Plattenbauteils erstrecken.

## Revendications

1. Elément structural de type plaque sandwich comprenant :
des première et deuxième plaques extérieures (11, 12) en métal ;
une âme (14) en matériau plastique ou polymère substantiellement compact, collée auxdites plaques extérieures avec une résistance suffisante pour transférer les forces de cisaillement entre elles ;
et une pluralité de formes légères (13) disposées dans ladite âme (14), les formes ayant une masse volumique inférieure audit matériau plastique ou polymère compact ;
dans lequel lesdites formes légères (13) sont disposées de telle manière que des nervures (15, 16) dudit matériau plastique ou polymère s'étendent dans deux directions sensiblement orthogonales dans le plan dudit élément en plaque, lesdites nervures s'étendant entre lesdites première et deuxième plaques extérieures.

2. Elément structural de type plaque sandwich selon la revendication 1 et ayant une forme rectiligne, dans lequel lesdites deux directions sensiblement orthogonales sont sensiblement parallèles aux bords dudit élément structural de type plaque sandwich.

3. Elément structural de type plaque sandwich selon la revendication 1 et ayant une forme sensiblement rectiligne, dans lequel lesdites directions sensiblement orthogonales forment un angle aigu avec les bords dudit élément structural de type plaque sandwich.

4. Elément structural de type plaque sandwich selon la revendication 1, 2 ou 3, dans lequel l'espacement entre les nervures (15) s'étendant dans une première desdites deux directions sensiblement orthogonales est plus grand que l'espacement entre les nervures (16) s'étendant dans une deuxième desdites deux directions sensiblement orthogonales.

5. Elément structural de type plaque sandwich selon la revendication 4, dans lequel l'espacement entre les nervures (15) s'étendant dans ladite première desdites deux directions sensiblement orthogonales est compris dans l'intervalle de 0,5 à 2 m.

6. Elément structural de type plaque sandwich selon l'une quelconque des revendications précédentes, dans lequel l'épaisseur desdites nervures (15, 16) est comprise dans l'intervalle de 10 à 100 mm.

7. Elément structural de type plaque sandwich selon l'une quelconque des revendications précédentes, dans lequel lesdites nervures (15, 16) s'étendent de façon substantiellement ininterrompue d'un bord à un autre dudit élément structural de type plaque sandwich.

8. Elément structural de type plaque sandwich selon l'une quelconque des revendications précédentes, dans lequel lesdites nervures (15, 16) s'étendent entre lesdites première et deuxième plaques extérieures (11, 12).

9. Elément structural de type plaque sandwich selon l'une quelconque des revendications précédentes, dans lequel lesdites nervures (15, 16) ont été formées par injection dudit matériau plastique ou polymère dans un espace défini entre lesdites première et deuxième plaques.

10. Procédé de fabrication d'un élément structural de type plaque sandwich, comprenant les étapes consistant à :
prendre des première et deuxième plaques extérieures (11, 12) en métal, espacées l'une de l'autre avec une pluralité de formes légères (13) disposées entre elles ;
injecter un matériau plastique ou polymère non durci pour remplir l'espace défini entre lesdites plaques extérieures et lesdites formes légères ; et
faire durcir ledit matériau plastique ou polymère pour former un matériau substantiellement compact (14) qui relie lesdites plaques extérieures l'une à l'autre avec une résistance suffisante pour transférer les forces de cisaillement entre elles ;
dans lequel lesdites formes légères sont disposées de telle manière que ledit matériau plastique ou polymère forme des nervures (15, 16) s'étendant dans deux directions sensiblement orthogonales dans le plan dudit élément en plaque.
